(19) Europäisches Patentamt
European Patent Office
Office européen des brevets

(11) **EP 2 851 648 A1**

(12) **EUROPEAN PATENT APPLICATION**

(43) Date of publication:
**25.03.2015 Bulletin 2015/13**

(51) Int Cl.:
***G01B 5/20*** (2006.01)

(21) Application number: **14185992.6**

(22) Date of filing: **23.09.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **24.09.2013 JP 2013197338**

(71) Applicant: **CANON KABUSHIKI KAISHA Ohta-ku Tokyo 146-8501 (JP)**

(72) Inventor: **Miyata, Akinori Ohta-ku, Tokyo (JP)**

(74) Representative: **Northway, Daniel Robert Canon Europe Ltd European Patent Department 3 The Square Stockley Park Uxbridge, Middlesex UB11 1ET (GB)**

(54) **Shape measurement method and shape measurement apparatus**

(57) A shape measurement method includes acquiring a plurality of partial measurement data sets of a measurement surface (1a) and inclination data corresponding to the partial measurement data sets; performing fitting of the partial measurement data sets so that differences between a reference equation (D) and the partial measurement data sets are reduced, while the relative tilt between the partial measurement data sets is maintained less than or equal to a predetermined threshold; and obtaining the shape of the measurement surface (1a) by connecting the fitted partial measurement data sets.

FIG. 1A
FIG. 1B
FIG. 1C
FIG. 1D
FIG. 1E
FIG. 1F
FIG. 1G

**Description**

The present invention relates to shape measurement methods and shape measurement apparatuses for connecting partial measurement data sets obtained by measuring partial regions of a measurement object individually. In particular, the present invention relates to a shape measurement method and a shape measurement apparatus for measuring a surface shape of an optical element or a mold for manufacturing an optical element with high accuracy.

With the increase in functionality and reduction in size of optical products, the use of lenses having large aperture angles, that is, so-called large-aperture-angle lenses, has increased. For example, large-aperture-angle lenses are used as image pickup lenses of cameras or pickup lenses for reading optical discs. Some of these lenses have a shape close to a hemispherical shape with a half aperture angle that exceeds 70 degrees.

To manufacture optical elements such as the above-described lenses with high accuracy, it is necessary to measure the surface shape of the optical elements. As a method for low-cost mass production of the optical elements, molding has been widely used, and high-accuracy measurement of molds for the molding process has also been performed.

Various types of shape measurement apparatuses for measuring optical elements or molds are commercially available. For example, a surface shape of a measurement surface may be measured by scanning the measurement surface with a probe while the probe is in contact with or at a constant distance from the measurement surface and acquiring movement information of the probe (position and orientation). Alternatively, the surface shape may be measured by an optical interference method, in which the measurement surface is irradiated with measurement light and the shape of the measurement surface is determined on the basis of information of the wavefront of the reflected light, or by a Shack-Hartmann method. However, in either case, it has been difficult to measure the entire region of a large-aperture-angle lens having a half aperture angle of 70 degrees with high accuracy.

Here, a measurement of an end portion, which is a steeply inclined portion, of a large-aperture-angle lens will be considered. When, for example, a probe is used for the measurement, it is difficult to control the position and contact pressure of the probe. Alternatively, when an optical measurement is performed, although it is necessary to irradiate a surface of the large-aperture-angle lens with measurement light in a direction substantially orthogonal to the surface, it is difficult to cause the measurement light to travel a direction orthogonal to the steeply inclined portion.

A measurement method called stitching (stitching measurement) is known as an effective method for measuring a large-aperture-angle lens that is difficult to measure. A general procedure of the stitching measurement is as follows. That is, first, a measurement object is mounted on a tilting jig that is capable of holding the measurement object in different orientations.

Next, measurement of a region that can be measured while the measurement object is at a certain orientation is performed. A measurement data set acquired as a result of this measurement is a data set corresponding to only a part of the entire region of the measurement surface (partial measurement data set). Then, the orientation of the measurement object is changed, and a partial measurement data set is acquired in a similar manner. Thus, partial measurement data sets are acquired so as to cover the entire region of the measurement surface. Then, the acquired partial measurement data sets are connected together to obtain shape data that covers the entire region of the measurement surface. Even when the measurement surface has a maximum inclination angle of 70 degrees, when the measurement object is tilted by 20 degrees, the inclination angle at which the measurement is performed can be reduced to 50 degrees. Since the inclination angle of a region to be measured can be reduced by tilting the measurement object, reduction in accuracy caused when a steeply inclined region is measured can be suppressed.

Since the partial measurement data sets are obtained by measuring the regions into which a single measurement surface has been divided, there should be a single ideal way to connect the partial measurement data sets together. However, in practice, a displacement occurs when the partial measurement data sets are connected together. In this specification, the displacement that occurs when the partial measurement data sets are connected together is sometimes referred to as a "connection error". When the connection error occurs, the shape represented by the shape data, of course, differs from the actual shape of the measurement surface, and a measurement error occurs in accordance with the amount of the connection error. To perform the stitching measurement with high accuracy, it is important to reduce the connection error when the partial measurement data sets are connected together.

Japanese Patent Laid-Open No. 2009-294134 discloses an example of a method of stitching measurement. In this method, a computation process is performed to fit partial measurement data sets to a reference equation common to the partial measurement data sets by changing an orientation parameter of each partial measurement data set. As a result of the computation process, the orientation parameters of the partial measurement data sets are determined. The shape data for the entire region can be obtained by connecting the partial measurement data sets at determined positions.

PCT Japanese Translation Patent Publication No. 2008-533439 discloses another example of a method of stitching measurement. In this method, a reference object is disposed outside a measurement surface. Data of the reference object (reference data) is acquired in addition to partial measurement data sets. Orientation parameters of the partial measurement data sets are determined on the basis of the reference data.

Each orientation parameter includes a shift parameter that defines the orientation in a translation direction and a tilt parameter that defines the orientation in a rotational direction. The orientation parameters are determined from the partial measurement data sets and data acquired by measuring the reference object mounted on a jig that supports the measurement object. The shape data for the entire region can be obtained by connecting the partial measurement data sets at predetermined positions.

The computation process performed in the method disclosed in Japanese Patent Laid-Open No. 2009-294134 for fitting the partial measurement data sets to the reference equation by changing the orientation parameters of the data and coefficients of the reference equation is sometimes referred to as "fitting". The stitching process in which fitting of the partial measurement data sets is performed is hereinafter referred to as "fitting stitching".

The method disclosed in PCT Japanese Translation Patent Publication No. 2008-533439 is characterized in that information other than the partial measurement data sets (external reference) is used to connect the partial measurement data sets. The stitching process in which the external reference is used is hereinafter referred to as "external reference stitching".

In fitting stitching, the orientation parameters are determined by using the partial measurement data sets. The connection error due to the shift parameters does not depend on locations at which data for determining the orientation parameters are acquired. In fitting stitching, the orientation parameters are determined from the measurement data of the measurement surface itself (the number of data points is relatively large). Therefore, the influences of errors cancel each other, and the connection error due to the shift parameters can be effectively reduced.

In the case where the measurement surface has a curvature, the measurement is generally performed at a large inclination angle at the ends of measurement regions. Therefore, large measurement errors tend to occur at the ends of measurement regions.

When a single partial measurement data set is considered, if values of the partial measurement data set include large errors at locations separated from the center of the partial measurement data set, a large connection error due to the tilt parameters easily occur when the partial measurement data set is connected to another partial measurement data set.

Thus, with fitting stitching, although the connection error due to the shift parameters can be effectively reduced, the connection error due to the tilt parameters tends to increase.

In external reference stitching, the orientation parameters are determined by using the measurement data of the reference object whose position and orientation are fixed with respect to the measurement object. The reference object can be mounted on, for example, a jig for fixing the measurement object. Thus, the reference object can be relatively easily installed. The connection error due to the tilt parameters can be reduced by increasing the distance between the reference object and a position corresponding to the center of each partial measurement data set. Thus, external reference stitching is advantageous in that the connection error due to the tilt parameters can be easily reduced.

However, in external reference stitching, although the effect of cancellation of the influences of errors can be achieved by acquiring a large amount of measurement data of the reference object, the measurement data of the reference object is not related to the shape of the measurement surface. Therefore, external reference stitching is less advantageous in reducing the connection error due to the shift parameters.

As is clear from the above, fitting stitching and external reference stitching have both advantages and disadvantages with regard to determination of the shift parameters and the tilt parameters.

The present invention provides a shape measurement method and a shape measurement apparatus for reducing both the connection error due to the shift parameters and connection error due to the tilt parameters and measuring a shape of a measurement surface with high accuracy.

The present invention in its first aspect provides a shape measurement method as specified in claims 1 to 7.

The present invention in its second aspect provides a recording medium as specified in claim 8.

The present invention in its third aspect provides a shape measurement apparatus as specified in claim 9.

Further features of the present invention will become apparent from the following description of exemplary embodiments with reference to the attached drawings.

Figs. 1A to 1F illustrate state transitions according to a first example, and Fig. 1G illustrates an arrangement of a measurement object in a measurement process according to the first example.

Fig. 2 illustrates the structure of a shape measurement apparatus according to the first example.

Figs. 3A and 3B are graphs showing an effect of the first example.

Fig. 4 illustrates the structure of a shape measurement apparatus according to a second example.

Embodiments of the present invention will be described with reference to the drawings.

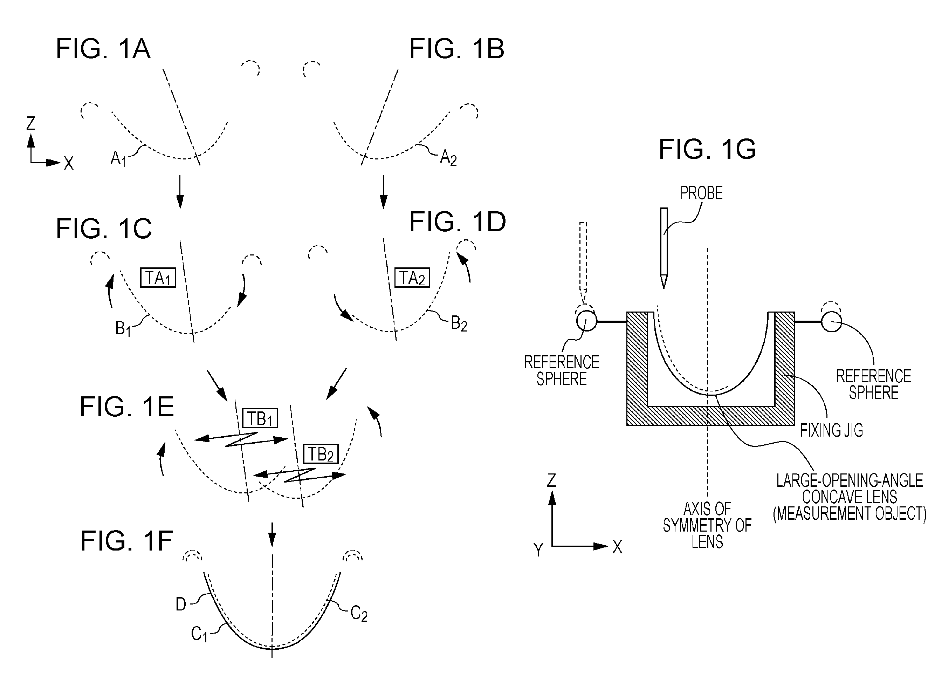

Figs. 1A to 1F illustrate state transitions according to a first example, and Fig. 1G illustrates an arrangement of a measurement object in a measurement process according to the first example.

As illustrated in Fig. 1G, a large-aperture-angle concave lens, for example, is used as a measurement object in the present example. The lens has a measurement surface, which is an axially symmetric aspheric surface, and has a size such that the lens can be placed within in a movable range of a probe illustrated in Fig. 1G in an X-axis direction. A Z-axis for the measurement is set so as to be parallel to the axis of symmetry of the lens, and directions that are perpendicular to the Z-axis and that extend toward the right side and far side of Fig. 1G are defined as the X-axis direction and a Y-axis direction, respectively. The shape of the measurement surface (concave surface of the lens) is measured by scanning the surface with the probe. The measurement object is fixed to a fixing jig. The fixing jig includes shafts that extend rightward and leftward in Fig. 1G, and reference spheres are attached to the ends of the respective shafts.

End portions of the measurement surface are steeply inclined with respect to the longitudinal direction of the probe, and precise measurement of the end portions is difficult. Accordingly, the measurement can be performed in a state such that the measurement object is tilted. The inclination of the measurement surface can be reduced by tilting the fixing jig around the Y-axis so as to tilt the measurement object with respect to the longitudinal direction of the probe. The orientation in which the measurement object is tilted leftward with respect to the Z-axis is referred to as "Orientation 1", and the orientation in which the measurement object is tilted rightward with respect to the Z-axis is referred to as "Orientation 2". Although the measurement is performed for each of the two orientations in the present example, the number of orientations is not limited. The number of partial measurement data sets needs to be large enough to cover the region to be measured, and may be further increased.

In the following description, calculations involving coordinate transformation of movement and rotation of each of the acquired measurement data sets will be described. Numerical calculation for achieving coordinate transformation of the measurement data sets is performed by using a coordinate transformation matrix T. Parameters of the coordinate transformation matrix T include a shift parameter $\beta$, which represents a displacement in a translation direction, and a tilt parameter $\alpha$, which represents a displacement in a rotational direction. In an XYZ space, each of the shift parameter $\beta$ and the tilt parameter $\alpha$ includes three components. In an XZ plane, the shift parameter $\beta$ includes two components, and the tilt parameter $\alpha$ includes a single component. The coordinate transformation matrix in which the shift parameter $\beta$ and the tilt parameter $\alpha$ represent the respective displacements is expressed as $T[\alpha,\beta]$.

When A is a measurement data set before the coordinate transformation and B is a measurement data set after the coordinate transformation, the measurement data set B can be obtained by multiplying A by $T[\alpha,\beta]$, and can be expressed as follows:

$$B = T[\alpha,\beta]A$$

Partial measurement data sets acquired when the orientation of the measurement object is set to Orientations 1 and 2 are defined as $A_n$ (n = 1, 2), where n is the number used to identify each of the partial measurement data sets. As illustrated in Figs. 1A and 1B, the partial measurement data sets $A_n$ are inclined from the Z-axis. The goal is to obtain shape data C by moving the partial measurement data sets $A_n$ so that connection errors of shift parameters and tilt parameters of the partial measurement data sets $A_n$ are reduced and then connecting the partial measurement data sets together.

First, the relative tilt between the partial measurement data sets $A_n$ is determined. The relative tilt is a difference in inclination between the partial measurement data sets $A_n$. In other words, when the relative tilt is zero, the connection error due to the tilt parameters is zero when the two partial measurement data sets are connected together. The relative tilt may be determined by setting a certain reference and determining data of inclination with respect to the reference. For example, a reference axis may be set in a space or on a plane, and an inclination of each partial measurement data set $A_n$ with respect to the reference axis is determined as inclination data $Q_n$. In this case, a relative tilt $Q_{21}$, which is a difference in inclination between the partial measurement data set $A_2$ and the partial measurement data set $A_1$, can be calculated as $Q_{21} = Q_2 - Q_1$.

In the present example, the relative tilt is determined by the following method. That is, referring to Fig. 1G, the fixing jig including the spherical reference bodies (reference spheres), which are arranged on the XY plane, is used. The reference spheres are arranged one on each side of the measurement surface, and two reference spheres are provided in total. The concave lens, which is a workpiece, is fixed to the fixing jig, and the two reference spheres are substantially fixed to the measurement object. Therefore, when the fixing jig is tilted by using a mechanism (not shown), the relative position between the two reference spheres changes in accordance with the inclination of the measurement object. In other words, the inclination of the measurement surface can be determined by acquiring the data of positions of the reference spheres at the position and orientation of the measurement object at the time when each partial measurement data set is acquired. The positions of the reference spheres may be determined by performing a measurement of the reference spheres together with the measurement of the measurement surface by using the same probe as that used to measure the measurement surface, or by performing a measurement of the reference spheres by using a dedicated measurement unit. The centers of the reference spheres are measured at each orientation, and data $Q_n$ of inclination

of the straight line that connects the centers of the spheres is calculated. When the reference axis is the X-axis, an inclination with respect to the X-axis is obtained. The centers of the reference spheres can be determined by any one of a number of known methods.

Next, as illustrated in Figs. 1C and 1D, the partial measurement data sets $A_n$ are moved so as to reduce the relative tilt therebetween to obtain partial measurement data sets $B_n$. More specifically, coordinate transformation matrices $TA_n[-Q_n,0]$ are set so that the partial measurement data sets $B_n$ after the movement are calculated as follows:

$$B_n = TA_n[-Q_n, 0]A_n$$

Thus, the partial measurement data sets are rotated such that the two reference spheres are arranged parallel to the reference axis (for example, the X-axis). Although the shift parameter of the coordinate transformation matrix is zero, it may instead be set to other values.

In the present example, two reference spheres are used because it is assumed that the measurement surface of the measurement object has a characteristic shape along the XZ plane. However, in the case where the measurement surface of the measurement object has a characteristic three-dimensional shape in the XYZ space, three reference spheres may be used. Also, the number of reference spheres may be more than three. As long as the relative tilt can be determined, reference bodies having shapes other than a spherical shape may be used. As long as the reference bodies have a characteristic shape, such as a projecting or recessed shape, the coordinates in a space or on a plane can be determined, and the relative tilt can be determined accordingly. The relative tilt can also be determined when the reference bodies have a planar shape.

As schematically illustrated in Fig. 1F, a fitting process is performed to fit the partial measurement data sets $B_n$ to a reference equation D that is common to the two partial measurement data sets that have been acquired. As a result of the fitting process, partial measurement data sets $C_n$ are obtained. In addition, coordinate transformation matrices $TB_n$ are also obtained as a result of the fitting process. To maximize the fitting level, an evaluation function H, which represents the difference between the reference equation D and the partial measurement data sets $C_n$, is defined. As a most simple example, the least squares sum may be used. In the present example, the evaluation function H is defined as follows:

$$H = \sum_n \sum_m \left( C_n(m) - D[k](m) \right)^2$$

$$= \sum_n \sum_m \left( TB_n[\alpha c, \beta_n] B_n(m) - D[k](m) \right)^2$$

The fitting level can be maximized by varying fitting parameters $[\alpha c, \beta_n, k]$ and minimizing the value of the evaluation function H. The value of the evaluation function H can be minimized by using, for example, the steepest-descent method.

Here, m is the data element number, and X(m) represents the $m^{th}$ element of X.

The reference equation D may be a polynomial equation of coefficient k. To allow the calculation of the difference between the reference equation D and the partial measurement data sets $C_n$, the reference equation D is expressed in the form of point sequence data as D[k](m). The reference equation D may be a design equation of the measurement surface. Alternatively, a polynomial equation suitable for the fitting process may be created by changing some of the coefficients of the design equation. For example, a value of a coefficient representing a curvature can be changed in accordance with the actual curvature of the measurement surface. Alternatively, an error approximation equation that represents an error shape may be added to the design equation. For example, a surface designed to have an axially symmetric aspheric shape may have an axially asymmetric shape error. In such a case, a polynomial equation representing an axially asymmetric shape may be added to the design equation. In the fitting process, some of the coefficients of the reference equation may be changed. Alternatively, all of the coefficients may be fixed.

When the fitting process is performed such that the shift parameters $\beta_n$ of the coordinate transformation matrices $TB_n$ are variable, the shift parameters $\beta_n$ can be determined as a result of the fitting process.

With regard to the tilt parameters, the fitting process is performed while the relative orientation between the partial measurement data sets is maintained so that the relative tilt between the partial measurement data sets is either zero or lower than or equal to a predetermined threshold.

Since the partial measurement data sets have been moved so as to reduce the relative tilt therebetween in the previous step, the relative tilt is not positively changed in the current step. To perform the fitting process in consideration of this idea, the tilt parameters set in the coordinate transformation matrices $TB_n$ may be set to a common value $\alpha c$ (= $\alpha_1 = \alpha_2$). However, even when the tilt parameters are set to a common value, the relative tilt somewhat changes as a result of, for example, a calculation error of a computer. Therefore, a threshold is set on the basis of the desired measurement accuracy, and variation in relative tilt within the threshold is allowed.

It is assumed that the tilt parameters $\alpha_1$ and $\alpha_2$ are equal to the common value $\alpha c$ when they are within a predetermined threshold range.

The calculation performed while some of the parameters are set to a common value is referred to as "coupled" calculation. Here, the fitting process is performed while the tilt parameters are coupled. Therefore, the fitting process is referred to as a tilt-parameter-coupled fitting process. The effects of the tilt-parameter-coupled fitting process will be described below.

In the fitting process, the fitting parameters $[\alpha c, \beta_n, k]$ may be calculated simultaneously or individually. For example, the fitting process may be dividing into a fitting process for each partial measurement data set and a fitting process for all of the partial measurement data sets. First, an evaluation function is defined for each of the partial measurement data sets, and the shift parameters $\beta_n$ are calculated.

Then, an evaluation function for all of the partial measurement data sets is defined, and the common tilt parameter $ac$ and a common shift parameter $\beta c$ are calculated. Thus, various types of fitting methods may be used. Any method may be used as long as the fitting process can be performed while the tilt parameters are coupled.

The shape data C is created by connecting the partial measurement data sets $C_n$ obtained as a result of the fitting process. The data sets may be connected by, for example, arranging data arrays of the respective data sets and linking them together into a single data array, or by calculating average values for a range in which the data sets overlap and creating new data including the calculated average values. Thus, various methods may be used.

A shape evaluation is performed for the shape data C, and then the measurement is completed.

The effects of the tilt-parameter-coupled fitting process will now be described.

First, a fitting process in which the tilt parameters are variable will be considered. In this case, the coordinate transformation matrices are $TB_n[\alpha_n, \beta_n]$.

In the state before the fitting process, the connection error due to the tilt parameters is sufficiently small since the relative tilt is reduced by using the data obtained by measuring the reference spheres. Therefore, when the tilt parameters are variable, although the connection error due to the tilt parameters is initially small, there is a risk that the connection error will increase as a result of the changes in the tilt parameters.

Next, a fitting process in which the tilt parameters are fixed will be considered. In this case, the coordinate transformation matrices are $TB_n[0, \beta_n]$.

Although the connection error due to the tilt parameters is small in the state before the fitting process, the inclination with respect to the reference equation D is not taken into consideration. In other words, it is likely that there is a difference in inclination between the reference formula D and the partial measurement data sets $B_n$. When the tilt parameters are fixed in this state, the value of the evaluation function is minimized by changing the shift parameters. In other words, the difference in inclination is compensated for by a movement in a translation direction. This differs from the ideal state of connection, and a connection error due to the shift parameters is generated.

If the inclinations of the reference spheres and the measurement surface are physically adjusted with the desired accuracy of stitching connection, a difference in inclination between the reference equation and the partial measurement data sets is small. However, this is substantially impossible when the desired accuracy of connection is in the order of less than 1 micrometer.

In consideration of the above, when the tilt-parameter-coupled fitting process is performed, the difference in inclination between the reference equation and the partial measurement data sets can be reduced while the relative tilt between the partial measurement data sets is maintained. Thus, the shift parameters can be determined with high accuracy and the connection error can be reduced.

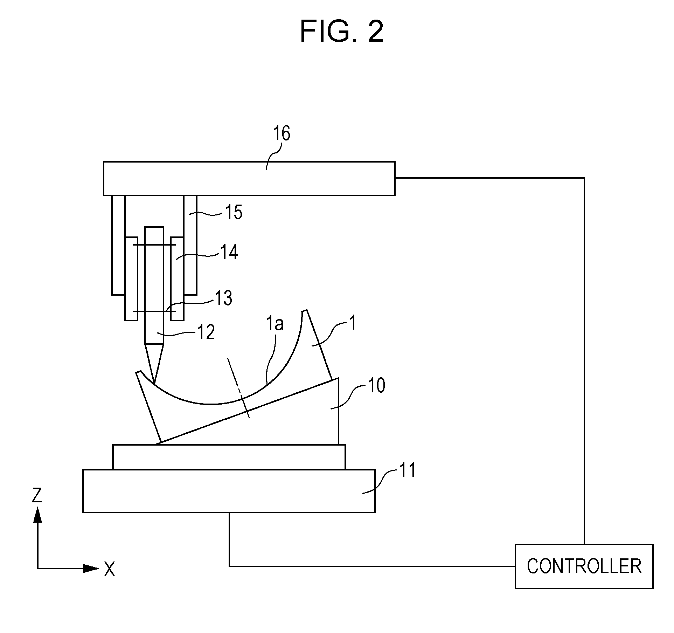

Fig. 2 illustrates the structure of a shape measurement apparatus according to the first example. A measurement surface 1a is formed on a measurement object 1. The measurement object 1 is mounted on a tilting jig 10 whose orientation can be changed. The tilting jig 10 is attached to a base 11. A probe 12 is brought into contact with the measurement surface 1a. The probe 12 is attached to a housing 14 with elastic leaf springs 13 interposed therebetween. The housing 14 is attached to a Z stage 15. When the Z stage 15 is moved toward the probe 12, the leaf springs 13 are deformed and the probe 12 receives a contact force. The Z stage 15 is attached to an X stage 16. When the X stage 16 is moved in the X-axis direction, the probe 12 moves in the Z-axis direction so as to follow the measurement surface 1a. The contact force can be maintained constant by moving the Z stage 15 in accordance with the movement of the probe 12. The shape of the measurement surface 1a can be measured by acquiring the XZ coordinates of the probe 12 in time series.

A program for executing the above-described characteristic steps according to the first example is installed in a controller illustrated in Fig. 2.

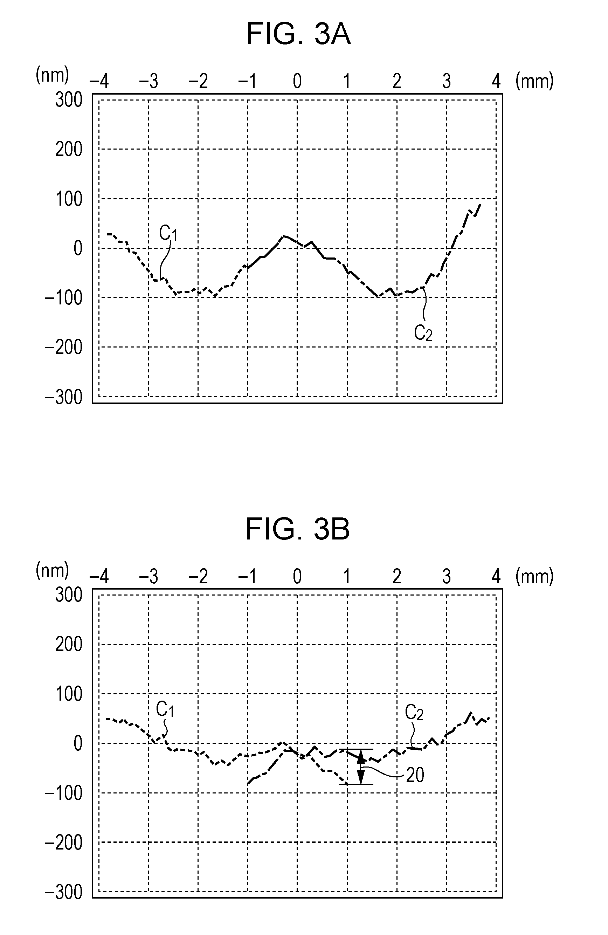

Figs. 3A and 3B are graphs showing an effect of the first example. Fig. 3A shows the result of the stitching process according to the first example. Fig. 3B shows the result of a stitching process based on fitting stitching according to the related art.

In the graphs, $C_1$ and $C_2$ represent partial measurement data sets. Referring to Fig. 3B, a connection error has occurred due to the influence of measurement errors of the partial measurement data sets, and a large difference (20) is generated between $C_1$ and $C_2$ in the vertical direction. Also when a stitching process based on external reference stitching, which is another stitching process according to the related art, is performed, a difference (not shown) is generated between $C_1$ and $C_2$ in the vertical direction. Thus, with the stitching processes according to the related art, a connection error occurs.

In contrast, referring to Fig. 3A, the difference between $C_1$ and $C_2$ in the vertical direction is very small, that is, as small as 10 nm or less. Thus, according to the first example, the measurement surface can be measured with high accuracy by determining the orientation parameters, that is, both the shift parameters and the tilt parameters, with high accuracy.

The above-described relative tilt may be determined by various methods. Examples of such a method will now be described.

According to a first method, the relative tilt is determined by measuring reference bodies that are fixed to the measurement surface, as described above. In this method, the relative tilt is determined on the basis of the coordinates of the reference bodies in a space or on a plane. Owing to the geometrical relationship, the accuracy of the relative tilt increases as the distance between the measurement object and each reference object increases.

According to a second method, the relative tilt is determined from the information of the angle of the tilting jig on which the measurement object is mounted.

For example, a wedge-shaped tilting jig is prepared, and the measurement object is mounted on the tilting jig so as to be inclined at an angle of the wedge. The angle of the wedge is measured with high accuracy with another measurement apparatus. Thus, the relative tilt can be determined with high accuracy. Alternatively, a high-accuracy angular encoder is attached to the tilting jig, and the value of the angular encoder is acquired. Also in this case, the relative tilt can be determined with high accuracy.

According to a third method, the measurement object is temporarily removed from the tilting jig, and a reference object is attached to the tilting jig in place of the measurement object. Then, the reference object is measured. Since the reference object is attached to the tilting jig in place of the measurement object, no additional space for accommodating the reference object is required. Furthermore, since the reference object can be placed so as to extend over the entire area of the measurement region, the size of the reference object can be increased. When the size of the reference object is increased, the number of data points is increased, and the relative tilt can be determined with high accuracy.

A program for causing a computer to execute the above-described steps may be utilized. In addition, a recording medium which stores the program may also be utilized.

Second Embodiment

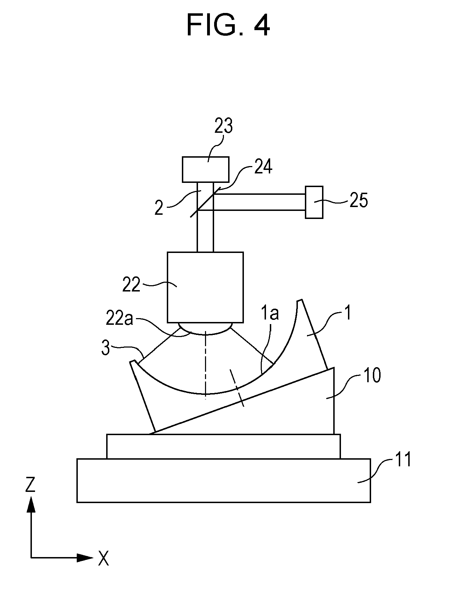

Fig. 4 illustrates the structure of a shape measurement apparatus according to a second example. A tilting jig 10 and a base 11 are the same as those in the first example. Parallel light 2 is emitted from a laser unit 23. The parallel light 2 is incident on an optical element 22, and is converted into measurement light 3. The measurement light 3 is reflected by a measurement surface 1a, is incident on the optical element 22 again, and is converted into parallel light 2 which is caused to be incident on a camera 25 by a beam splitter 24. The camera 25 stores an image. The shape of the measurement surface 1a is determined by analyzing the stored image. In the case where the shape measurement apparatus is of an interference type, reference light is reflected by a reference surface 12a, and the shape is determined from an image of an interference pattern generated when the reflected light from the measurement surface and the reflected light from the reference surface interfere with each other. In the case where the shape measurement apparatus is of a Shack-Hartmann type, the reflected light from the measurement surface is caused to pass through a microlens array (not shown) to form spots, and an image of the spots is stored. Then, the shape of the measurement surface is determined by comparing the image of the spots with an image of spots of a reference shape stored in advance.

In each of these measurement methods, a difference from a reference shape is determined. Therefore, the reference equation D used in the fitting process may be a polynomial equation representing a difference from the reference shape.

A shape measurement method according to embodiments of the present invention can be appropriately executed by using a shape measurement apparatus including a contact type shape measurement or an optical shape measurement unit such as those described above.

With a shape measurement method according to embodiments of the present invention, a step for determining the shift parameters and a step for determining the tilt parameters can be separately performed. More specifically, the shift parameters can be determined by stitching fitting, and the tilt parameters can be determined by external reference stitching. Therefore, both the connection error due to the shift parameters and the connection error due to the tilt parameters can be reduced, and the shape of a measurement surface can be determined with high accuracy.

**Claims**

1. A shape measurement method for measuring a shape of a measurement surface (1a) of a measurement object, the shape measurement method comprising:

   acquiring a plurality of partial measurement data sets of the measurement surface (1a) and inclination data corresponding to the partial measurement data sets;
   moving the plurality of partial measurement data sets such that a relative tilt between the partial measurement data sets is reduced;
   performing fitting of the partial measurement data sets so that differences between a reference equation (D) and the partial measurement data sets are reduced, while the relative tilt between the partial measurement data sets is maintained less than or equal to a predetermined threshold; and
   obtaining the shape of the measurement surface (1a) by connecting the fitted partial measurement data sets.

2. The shape measurement method according to Claim 1, wherein the inclination data corresponding to the partial measurement data sets is acquired by measuring a reference object, whose position and orientation is fixed relative to the measurement object (1) for which partial measurement data sets are to be acquired.

3. The shape measurement method according to Claim 1, wherein the inclination data is acquired on the basis of information of an angle of a jig, on which the measurement object (1) is mounted, at a position and an orientation of the measurement object (1) for which the partial measurement data sets are to be acquired.

4. The shape measurement method according to Claim 3, wherein the inclination data is acquired by measuring the reference object after placing a reference object on the jig, on which the measurement object (1) is mounted, in place of the measurement object (1).

5. The shape measurement method according to any one of Claims 1 to 4, wherein the inclination data includes tilt parameters that defines the orientation in a rotational direction.

6. The shape measurement method according to Claim 5, wherein the fitting of the partial measurement data sets is performed while the tilt parameters of the partial measurement data sets that are adjacent to each other are coupled.

7. The shape measurement method according to any one of Claims 1 to 6, wherein the inclination data corresponding to the partial measurement data sets is calculated from position data of a plurality of reference spheres provided on a fixing jig to which the measurement object (1) is fixed, the position data of the reference spheres being acquired by measuring positions of the reference spheres at each position and orientation for which the partial measurement data sets of the measurement object (1) are acquired.

8. A recording medium storing a program for causing a computer to execute the shape measurement method according to any one of Claims 1 to 7.

9. A shape measurement apparatus for measuring a shape of a measurement surface (1a) of a measurement object, the shape measurement apparatus comprising:

   a contact-type or optical shape measurement unit; and
   a controller adapted to perform the steps of
   acquiring a plurality of partial measurement data sets of the measurement object (1) and inclination data corresponding to the partial measurement data sets,
   performing fitting of the partial measurement data sets so that differences between a reference equation (D) and the partial measurement data sets are reduced while a relative orientation between the partial measurement data sets is maintained so that a relative tilt between the partial measurement data sets is less than or equal to a threshold determined in advance by using the inclination data corresponding to the partial measurement data sets, and

obtaining the shape of the measurement surface (1a) by connecting the fitted partial measurement data sets.

FIG. 1A

FIG. 1B

FIG. 1C

FIG. 1D

FIG. 1E

FIG. 1F

FIG. 1G

PROBE

REFERENCE SPHERE

REFERENCE SPHERE

FIXING JIG

LARGE-OPENING-ANGLE CONCAVE LENS (MEASUREMENT OBJECT)

AXIS OF SYMMETRY OF LENS

$A_1$, $A_2$, $B_1$, $B_2$, $C_1$, $C_2$, $D$

$TA_1$, $TA_2$, $TB_1$, $TB_2$

# FIG. 2

# FIG. 3A

# FIG. 3B

# FIG. 4

Europäisches
Patentamt

European
Patent Office

Office européen
des brevets

## EUROPEAN SEARCH REPORT

Application Number

EP 14 18 5992

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 555 561 A1 (MITAKA KOKI KK [JP]) 20 July 2005 (2005-07-20) * abstract; figures 4-8 * * paragraphs [0020] - [0030] * | 1-9 | INV. G01B5/20 |
| X,D | WO 2006/082368 A2 (TAYLOR HOBSON LTD [GB]; MILLS MICHAEL [GB]) 10 August 2006 (2006-08-10) * abstract; claim 1; figures 1,4,5 * | 1-9 | |
| X,D | US 2009/306931 A1 (NEGISHI MAHITO [JP]) 10 December 2009 (2009-12-10) * abstract; figure 1 * * paragraphs [0077] - [0110] * | 1-9 | |
| X | JP H08 233506 A (RICOH KK) 13 September 1996 (1996-09-13) * abstract; figure 2 * | 1-9 | |
| A | JP H07 91933 A (RICOH KK) 7 April 1995 (1995-04-07) * abstract; figure 2 * | 1-9 | TECHNICAL FIELDS SEARCHED (IPC) G01B |

The present search report has been drawn up for all claims

| Place of search | Date of completion of the search | Examiner |
|---|---|---|
| Munich | 13 January 2015 | Passier, Martinus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 14 18 5992

This annex lists the patent family members relating to the patent documents cited in the above-mentioned European search report.
The members are as contained in the European Patent Office EDP file on
The European Patent Office is in no way liable for these particulars which are merely given for the purpose of information.

13-01-2015

| Patent document cited in search report | | Publication date | Patent family member(s) | | | Publication date |
|---|---|---|---|---|---|---|
| EP 1555561 | A1 | 20-07-2005 | DE | 602005002274 | T2 | 29-05-2008 |
| | | | EP | 1555561 | A1 | 20-07-2005 |
| | | | JP | 3923945 | B2 | 06-06-2007 |
| | | | JP | 2005201656 | A | 28-07-2005 |
| | | | KR | 20050074330 | A | 18-07-2005 |
| | | | TW | I327638 | B | 21-07-2010 |
| | | | US | 2005151978 | A1 | 14-07-2005 |
| WO 2006082368 | A2 | 10-08-2006 | EP | 1851509 | A2 | 07-11-2007 |
| | | | GB | 2422015 | A | 12-07-2006 |
| | | | JP | 2008533439 | A | 21-08-2008 |
| | | | US | 2010217561 | A1 | 26-08-2010 |
| | | | WO | 2006082368 | A2 | 10-08-2006 |
| US 2009306931 | A1 | 10-12-2009 | JP | 5424581 | B2 | 26-02-2014 |
| | | | JP | 2009294134 | A | 17-12-2009 |
| | | | US | 2009306931 | A1 | 10-12-2009 |
| JP H08233506 | A | 13-09-1996 | JP | 3182056 | B2 | 03-07-2001 |
| | | | JP | H08233506 | A | 13-09-1996 |
| JP H0791933 | A | 07-04-1995 | JP | 3352507 | B2 | 03-12-2002 |
| | | | JP | H0791933 | A | 07-04-1995 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009294134 A

- JP 2008533439 PCT